# EUROPEAN PATENT APPLICATION

(11) **EP 3 858 137 A1**
(43) Date of publication of application: **04.08.2021**
(21) Application number: 20154580.3
(22) Date of filing: 30.01.2020
(51) Int. Cl.: A01N 37/44, A01N 25/00, A01P 17/00

(54) **USE OF DENATONIUM BENZOATE AS A SEED TREATMENT FOR CORN AS BIRD REPELLENT**

(71) Applicant: KWS SAAT SE & Co. KGaA, 37574 Einbeck (DE)
(72) Inventor: Holzfuß, Constanze, 34212 Melsungen (DE)

(57) **Abstract**

The present invention relates to the protection of corn seed and corn plants from bird damage. Treatment with denatonium benzoate provides corn seeds which are protected against birds, especially corvids.

## Description

The present invention relates to the protection of corn seed and corn plants from bird damage. Treatment with denatonium benzoate provides corn seeds which are protected against birds, especially corvids.

Birds of the genus *Corvus,* commonly known as corvids, are widespread and numerous in Europe and North America throughout the year. Included in the diet of corvids are insects, worms, snails, slugs, berries, legumes and cereals. The most serious corvid damage to cereals is due to feeding on seed either before or after emergence resulting in reduced plant populations on the field. Corn is subjected to severe damage by the feeding activity of corvids. It would appear from the pattern of 'excavation' holes where damage occurs that corvids are quite efficient at locating seed in newly-sown crops. In newly-emerged crops corvids uproot seedlings to which the seed with some remaining endosperm is attached.

Today, mainly two substances are used for bird control in corn cultivation: Mesurol with the active ingredient methiocarb (4(methylthio)3,5-xylyl-N-methyl carbamate) and Thiram (tetramethylthiuram sulphide). These substances have been applied already for decades and many studies on efficiency as bird repellent have been done and many studies show the strong effect as bird repellent without affecting the germination ability of the seeds. However, there are also studies showing that for example Thiram seems to effect significant reduction in early seedling vigour (Sandhu et al. (1987). Evaluation of methiocarb and thiram as seed treatments for protecting sprouting maize from birds in Punjab (India). International Journal of Pest Management, 33(4), 370-372.).

Since recently several chemicals have been banned by the European Commission, there is a need for alternative substances. Thus, it was the problem underlying the present invention to provide a seed treatment which is suitable for protecting corn seed from bird damage, preferably without impairing germination ability of the seeds. Compromising germination and quality of seed can lead to significantly lower yields. Particularly desirable in this context would be substances that protect corn seed and seedlings, but are safe for consumption of the plants and preferably longer detectable in the mature plant.

One substance that has often been suggested as animal repellent is denatonium benzoate (N-Benzyl-2-(2,6-dimethylanilino)-N,N-diethyl-2-oxoethan-1-aminium benzoate, Bitrex), which is a bittering agent in the prevention of accidental poisoning of e.g. children (Sibert & Frude (1991). Emergency Medicine Journal, 8(1), 1-7.). However, there are only very few studies on the application of denatonium benzoate as bird repellent, in particular corvid repellent, in cereals. Kennedy & Connery ((2008). An investigation of seed treatments for the control of crow damage to newly-sown wheat. Irish Journal of Agricultural and Food Research, 79-91.) report on the use of different substances as corvid repellents in wheat. They concluded that denatonium benzoate only provided a modest improvement and in specific concentrations the damage by the crows was even higher that in the untreated control.

In the present invention, however, it was surprisingly found that denatonium benzoate offers excellent protection, especially for corn seed, against bird damage. The activity of denatonium benzoate as corvid repellent for corn was comparable or even better than the best bird repellents like Thiram, Korit and Mesurol. In addition, it was found that denatonium benzoate has a systemic effect on the corn plant. This results in bird protection of the seed but also the emerged young seedlings. Since the denatonium benzoate is diluted over the time of growing and ripening, the harvested crop, e.g. the cobs of corn, do not show amounts of denatonium which affect the post-harvest usage of corn, e.g. for animal feeding or silage purposes. Further, it was found that treatment with denatonium benzoate is safe on the seed and there is no degradation of germination or quality of the seed.

Thus, in a first aspect the present invention provides a corn seed treated with denatonium benzoate, wherein the denatonium benzoate is adsorbed on the seed and/or absorbed into the seed. Hence, denatonium benzoate may be present on the surface of corn seed, inside the corn seed or at both locations. If denatonium benzoate is present on the surface of corn seed the wording "the seed is coated with denatonium benzoate" is used alternatively in the present application. The term "coated" does not mean, however, that corn seed is completely covered by denatonium benzoate but refers to the fact that denatonium benzoate adheres to at least part of the surface of the corn seed.

According to a preferred embodiment of the invention, denatonium benzoate is at least partially absorbed into the seed. Denatonium benzoate is thus, at least partially, taken up by the corn seed but can also remain partially on the outside. The absorption of denatonium benzoate into the seed prevents the active agent from being washed off the surface of the corn seed, for example by rain, or rubbed off mechanically and allows the bird repellent activity to be maintained.

According to the invention, denatonium benzoate can be used as a single active agent or optionally in combination with one or more further active agents and/or additives. One or more active agents that can be employed may be any agent, preferably a chemical agent, that produces a desired effect on the seed, the plant that ultimately emerges from the seed, or both. Non-limiting examples of such chemical agents include pesticides (such as fungicides, acaricides, miticides, insecticides, insect repellents, rodenticides, molluscicides, nematicides, bactericides, and fumigants), herbicides, chemical hybridizing agents, auxins, antibiotics and other drugs, biological attractants, growth regulators, pheromones and dyes. Specific non-limiting examples of chemical agents useful as active ingredients include triticonazole, imidacloprid, tefluthrin, and silthiophenamide (N-allyl-4,5-dimethyl-2-trimethylsilylthiophene-3-caboxamide). Further active agents suitable for use in the present invention are, for example, phytochemicals and antimicrobial agents suitable to protect corn seed. Preferred examples thereof are bactericides, antiparasitics and fungicides such as DSM RD9103 BRP, chili extract, black cumin oil, yucca extract, mentha pulegium extract, aluminium ammonium sulfate, hops extract, fat encapsulated plant extracts, alginate encapsulated plant extracts, tefluthrin, yellow colour substance, SatecWFO20, metalaxyl, fludioxonil, prothioconazole, and combinations thereof, preferably Redigo M and/or Maxim XL.

Potential additives may be sticking agents that improve adhesion of denatonium benzoate to corn seed. Particularly preferred are sticking agents that are non-hazardous, preferably water-based sticking agents such as Sepiret®, Peridiam® Quality or Peridiam® Active and others. Further exemplary additives are fillers or bulking agents, and binders. Additionally, a talc or graphite powder can be added to keep the seeds from clumping.

A corn seed according to the present invention preferably contains denatonium benzoate in an amount effective to repel birds and thus provide protection against bird damage. In particular, the amount of denatonium benzoate on and/or in a corn seed according to the present invention is effective to repel birds from the genus *Corvus,* commonly known as corvids, such as crows, ravens, rooks and jackdaws. The birds are prevented from eating the seeds. However, they are not affected in terms of health. The denatonium benzoate is also not harmful to the health of other animals that may come into contact with the corn seeds according to the invention.

A further advantage of the corn seed according to the present invention, which has been treated with denatonium benzoate, is that the germination capacity of the seed is essentially the same as for untreated corn seed. Healthy growing seedlings and plants develop from corn seed according to the invention to preferably at least the same extent as from untreated corn seed.

A further aspect of the present invention is a corn plant or a part thereof grown from the corn seed according to the invention. Since denatonium benzoate surprisingly has systemic effects and may, at least partly, be absorbed into the corn seed, it is still present in emerged young seedlings. The concentration in seedlings is usually lower than in corn seed. Since the denatonium benzoate is diluted over the time of growing and ripening, the harvested crop, e.g. the cobs of corn, do not show amounts of denatonium which affect the post-harvest usage of corn, e.g. for animal feeding or silage purposes.

In corn plants developed from corn seed according to the invention, denatonium benzoate shows concentration differences between different plant sections/organs and development stadiums. In early stage denatonium benzoate is selectively detectable. The concentration in the complete plant is usually in the lower ppm range and in sprouts in the upper ppb range. In middle-aged corn plants the concentration in leaves is in the lower ppb range. Variation in concentration differs between type (Inter) and plant (Intra) and concentration of denatonium benzoate decrease from early stage to mid stage significantly.

In a particular embodiment of the invention the corn plant is a seedling and contains denatonium benzoate in a mean concentration of 1 to 50 ppm, preferably 5 to 30 ppm, more preferably 10 to 22 ppm, in the entire seedling. A further embodiment is a seedling containing denatonium benzoate in a mean concentration of 50 to 2500 ppb, preferably 100 to 1500 ppb, more preferably 200 to 800 ppb, in sprout tissue of the seedling. A still further embodiment is a plant in the development stage V6-V8 containing denatonium benzoate in a mean concentration of 0.5 to 100 ppb, preferably 1 to 50 ppb, more preferably 5 to 20 ppb, in leaf tissue of the plant. The amounts of denatonium benzoate in the developing plants are still sufficient to repel birds, in particular corvids.

In another particular embodiment of the invention the corn plant is a seedling and contains denatonium benzoate in a mean amount of 1 to 40 µg per plant, preferably 2 to 25 µg per plant, more preferably 5 to 15 µg per entire plant. A further embodiment is a seedling containing denatonium benzoate in a mean amount of 0.01 to 0.5 µg per sprout of the seedling, preferably 0.03 to 0.3 µg per sprout of the seedling, more preferably 0.05 to 0.2 µg per sprout of the seedling. The amounts of denatonium benzoate in the developing plants are still sufficient to repel birds, in particular corvids.

In addition to denatonium benzoate, the corn plant or parts thereof according to the invention may additionally contain one or more further active agents and/or additives. These additional active agents and/or additives are preferably those mentioned above in the context of corn seed. Depending on the extent to which these further active agents and/or additives are absorbed by the corn seed, their concentration in a corn plant or part thereof may vary. Active agents and additives that are not or only to a small amount absorbed by corn seed may still be present on the surface of a corn plant or parts thereof.

A further aspect of the present invention is the use of denatonium benzoate for protecting corn seed or corn plants, preferably a corn seedling, from bird damage. For this purpose, denatonium benzoate can optionally be combined with one or more further agents and/or additives, preferably those defined above with reference to a corn seed according to the invention. In principle, denatonium benzoate can be applied to the corn seed or corn plant or can be applied together with the corn seed during sowing on agricultural area. Pre-treatment of the corn seed is preferred, as the required amount of denatonium benzoate is then significantly lower than if it was only applied during sowing.

Furthermore, the present invention refers to a method of protecting a corn seed against bird damage, the method comprising contacting the corn seed with denatonium benzoate. Optionally, denatonium benzoate can be combined with one or more further active agents and/or additives as described hereinabove.

*"Contacting"* as used in the present invention means that a corn seed is somehow brought into contact with denatonium benzoate. The contacting may result in a more or less continuous coating of the corn seed. In terms of the invention, coating does not necessarily mean that the seed surface is completely coated with denatonium benzoate, but includes any kind of adhesion of denatonium benzoate to any part of the seed surface. There does not necessarily have to be direct contact between denatonium benzoate and the seed surface, but adhesion can in principle also occur via any intermediate layers or substances.

Any method known in the art can be used for contacting corn seed with denatonium benzoate in order to apply the active agent to the seed. Exemplary techniques suitable to effectively apply the denatonium benzoate uniformly over the corn seed surface and uniformly from seed-to-seed are pelleting and film coating methods. Pelleting is defined as the deposition of a layer of inert materials that may obscure the original shape and size of the seed, resulting in a substantial weight increase and improved plantability. Film coating retains the shape and the general size of the raw seed with minimal weight gain.

Seed pelleting consists of the application of solid particles that act as a filler (e.g., diatomaceous earth, calcium carbonate, or silica) or bulking agent with a binder or sticking agent to form a more or less spherically shaped dispersal unit. The pelleting process is commonly performed in a coating pan or tumbling drum. Binders or sticking agents can be mixed with water and sprayed onto the seeds, or blended dry with the filler. Coating formulations can be blends of binders or sticking agents and fillers, formulated as dry powders. In an alternating manner, powder is dusted and water sprayed onto corn seeds during the coating operation. Water temporarily binds the pellet and activates the sticking agent. Pelleting is a wet operation and therefore pellets must be dried at the completion of the coating process.

Binders for use in seed coating compositions are well-known in the art and examples thereof include water-soluble polymers, such as polyvinyl acetate, polyvinyl alcohol, polyvinyl pyrrolidone, polyurethane, methyl cellulose, carboxymethyl cellulose, hydroxylpropyl cellulose, sodium alginate, polyurethane, polyacrylate, casein, gelatin, pullulan, polyacrylamide, polyethylene oxide, polystyrene, styrene acrylic copolymers, styrene butadiene polymers, and poly(N-vinylacetamide). Also waxes such as carnauba wax, paraffin wax, polyethylene wax, bees wax, and polypropylene wax can be used as a binder or as an extra flow additive. Also, ethylene vinyl acetate can suitably be used as a binder.

Film coating of corn seeds consists of spraying a solution or suspension of film-forming polymer onto seeds to achieve a uniform deposition of materials. Coating pans used for pelleting may also be used; however, in contrast to the wet operation of pelleting, the aqueous film-forming formulation must be dried immediately after spraying to avoid agglomeration.

Both pelleting and film coating can serve as a delivery system for denatonium benzoate and optionally further active agents and/or additives at high-loading rates. In the case of pelleting, the active ingredients, formulated as dry powders, can be applied in the outer pellet layers. Final coating applications with filler material encapsulate the plant protectants and prevent worker exposure to the active ingredients.

In a preferred aspect of the invention, denatonium benzoate is used in an amount of 0.1 to 10 g/50,000 seeds, in particular 0.2 to 5 g/50,000 seeds. In case denatonium benzoate is used as a single active agent, the amount of denatonium benzoate used according to the invention is preferably 0.5 to 1.5 g/50,000 seeds. When denatonium benzoate is used in combination with one or more further active agents, a lower amount of denatonium benzoate may be sufficient, preferably 0.2 to 1 g/50,000 seeds.

Basically, denatonium benzoate may be applied in any form. For example, denatonium benzoate can be used as a solid powder (CAS: 3734-33-6; a.i. = 3500 ppm), in crystalline pure form or as a liquid composition. Preferably, a liquid composition for use according to the invention further comprises one or more sticking agents. In a particular aspect of the invention the liquid composition comprises denatonium benzoate in a concentration of about 1-100 g/l, in particular 10-50 g/l, preferably 13-27 g/l. Additionally, a liquid composition may include one or more further active agents or additives, preferably as described hereinabove. Alternatively or additionally it is possible to apply further active agents in a separate composition to the corn seed. In this case, the treatment with the additional active agent(s) can take place before or after the treatment with denatonium benzoate or simultaneously.

A still further aspect of the present invention relates to a method for providing a corn plant protected against bird damage, the method comprising
a) providing a corn seed as described above or a corn seed obtained or obtainable according to the method described hereinabove, and
b) growing a corn plant from the corn seed of a).

The corn seed provided in step (a) need not be treated with denatonium benzoate immediately before the method is carried out, but corn seed may be used which has been treated and then stored at some earlier stage.

The conditions for growing the corn plant in step b) correspond to the conditions usually applied for corn cultivation. The fact that the seed has been treated with denatonium benzoate does not make any particular demands on the growing conditions. In particular, a corn seed may be sowed in an agricultural area, where it will sprout, grow and ripen provided that nutrients, water and light are sufficiently available.

Since denatonium benzoate is at least partially absorbed by the corn seed, the resulting corn plant preferably contains denatonium benzoate. This also protects the emerged seedling and the developing corn plant from birds, in particular from corvids. Optionally, the corn plant may further contain one or more additional active agents and/or additives, in particular those described hereinabove.

The corn plant may, for example, be a seedling containing denatonium benzoate in a mean concentration of 1 to 50 ppm, preferably 5 to 30 ppm, more preferably 10 to 22 ppm, in the entire seedling; or a seedling containing denatonium benzoate in a mean concentration of 50 to 2500 ppb, preferably 100 to 1500 ppb, more preferably 200 to 800 ppb, in sprout tissue of the seedling; or a plant in the development stage V6-V8 containing denatonium benzoate in a mean concentration of 0.5 to 100 ppb, preferably 1 to 50 ppb, more preferably 5 to 20 ppb, in leaf tissue of the seedling. Alternatively, the corn plant may, for example, be a seedling containing denatonium benzoate in a mean amount of 1 to 40 µg per plant, preferably 2 to 25 µg per plant, more preferably 5 to 15 µg per entire plant, or is a seedling containing denatonium benzoate in a mean amount of 0.01 to 0.5 µg per sprout of the seedling, preferably 0.03 to 0.3 µg per sprout of the seedling, more preferably 0.05 to 0.2 µg per sprout of the seedling.

Under bird infestation conditions, corn seed and corn plants according to the invention are protected from bird damage in that birds are repelled from the corn seeds or corn plants due to denatonium benzoate being present on and/or in the corn seeds or corn plants. In an agricultural area these plants will grow better than plants that are grown from untreated seeds.

Thus, a further aspect of the present invention is a method for controlling bird damage on corn seeds or corn plants in an agricultural area comprising the following steps:
a) sowing corn seeds according to the invention or corn seeds obtained or obtainable according to the method of the invention on an agricultural area, and
b) growing corn plants from the corn seeds,
wherein one or both steps a) and b) are performed under the bird infestation conditions,
wherein the plant stand count on said agricultural area is higher than under comparable under the bird infestation conditions on a comparable agricultural area with untreated seeds or plants grown from untreated seeds, preferably untreated seeds or plants grown from untreated seeds of the same plant variety or plant genotype.

The corn seed sowed in step (a) need not be treated with denatonium benzoate immediately before sowing, but corn seed may be used which has been treated and then stored at some earlier stage.

The conditions for growing the corn plant in step b) correspond to those usually applied in corn cultivation. The fact that the seed has been treated with denatonium benzoate does not make any particular demands on the growing conditions.

*"Stand counts"* analyze the number of plants or crops on a field or a specific area on the field. In a preferred embodiment, the plant stand count on said agricultural area is at least 10%, preferably 20% and more preferably at least 30% higher than under comparable under the bird infestation conditions on a comparable agricultural area with untreated seeds or plants grown from untreated seeds, preferably untreated seeds or plants grown from untreated seeds of the same plant variety or plant genotype.

The invention shall be further illustrated by the following figures and examples.

### Figures

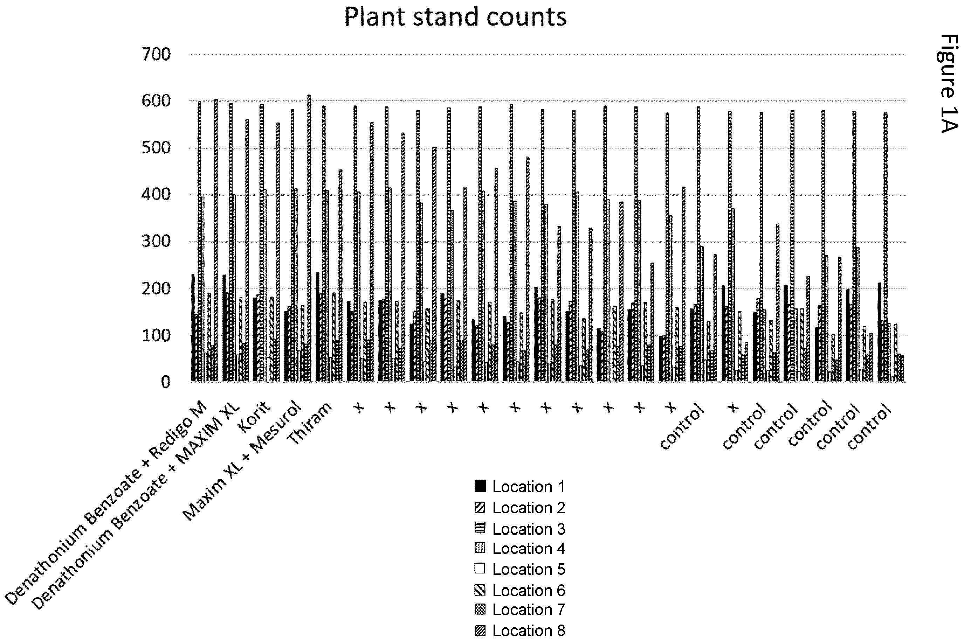

- **Fig. 1A**: shows the plant stand counts on individual trial locations for corn seed treated with denatonium benzoate or combinations of denatonium benzoate with various common fungicides compared with corn seed treated with common bird repellents and control

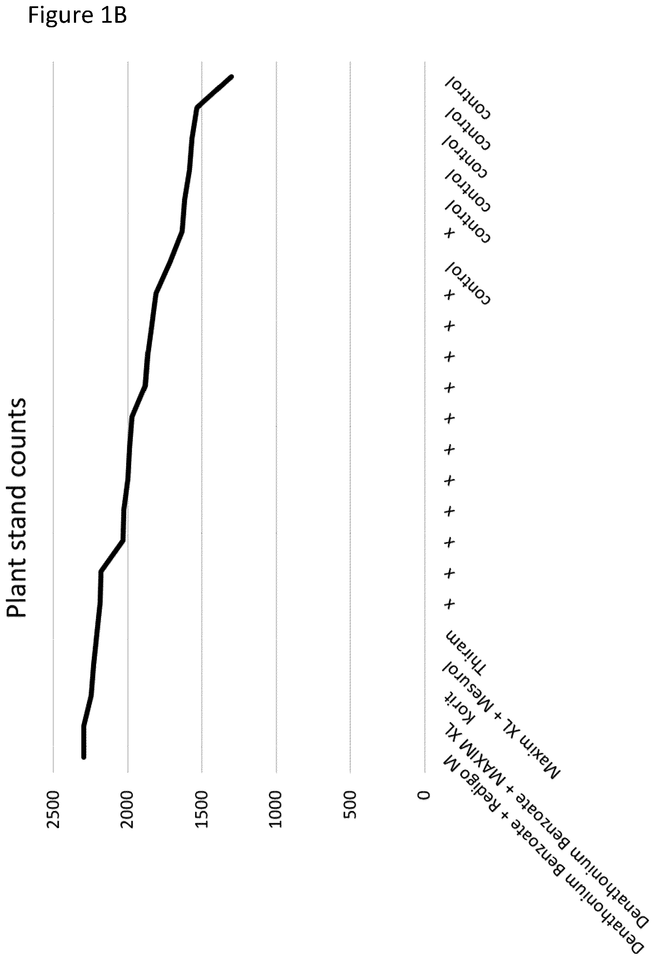

- **Fig. 1B**: shows the plant stand counts summed up over all locations.

### Examples

### 1. Evaluation of the efficacy as a bird repellent.

To evaluate the efficacy of different substances as a bird repellent, 25 locations (16 locations in Germany, 3 locations in France, 2 location in Switzerland, 2 locations in Belgium, one location in UK and 1 location in the Netherlands) have been identified with a potentially high pressure of bird damage. 17 different substances (DSM RD9103 BRP, Chili extract, Black Cumin oil, Yucca extract, Mentha pulegium extract, Aluminium-Ammonium-sulfate, Hops extract, fat encapsulated plant extracts, alginate encapsulated plant extracts, Tefluthrin, Thiram, Ziram, Methiocarb, yellow colour substance, denatonium benzoate, SatecWFO20, Redigo M, Maxim XL) have been chosen to evaluate differences on feeding behavior of crows. Three chemical references have been included in the trial: Mesurol liquid (Active substance Methiocarb), Korit (Active Substance Ziram) and TMTD (Active Substance Thiram). Mesurol liquid (Methiocarb) was the standard bird repellent in the past, with a European expiry date of the 3^{rd} of April 2020. TMTD (Thiram) can be used until 30^{th} of January 2020. Korit (Ziram) expires in 2021.

Denatonium Benzoate has been tested in 2 different concentrations: 0.4 g /50.000 seeds in combination with standard fungicides Redigo M and Maxim XL and 0.8 g/50.000 seeds as a stand-alone. In all combinations and variants filmcoats (sticking agents) have been used to provide an even distribution of the different substances to the seed.

In one embodiment, denatonium benzoate is used as a solid powder (CAS: 3734-33-6; a.i. = 3500 ppm) in crystalline pure form. In another embodiment denatonium benzoate powder is mixed with a sticker, preferably before application, and then preferably a concentration of 13.14 g per liter to 26.28 g per liter have been applied.

**Table 1. Exemplary mixture of compounds in a seed treatment:**

| | | | | | |
|---|---|---|---|---|---|
| fungicide | Maxim XL | 12,5 ml/u | Metalaxyl (10 g/l) 0.125 g a.i./u | 1,05 g/ml | MTL FLU |
| | | (13,13 g/u) | Fludioxonil (25 g/l) 0.313 g a.i./u | | |
| fungicide | RedigoM | 15 ml/u | Metalaxyl (20 g/l) 0.30 g a.i./u | 1.05 g/ml | MTL PRO |
| | | 16.1 g/u | Prothioconazole (100 g/l) 1.5 g a.i./u | | |
| Repellent | Bitrex | 0,2 - 5 g/u | Denatoniumbenzoat ai = 3500ppm CAS: 3734-33-6 | powder | |
| sticker | Sepiret 9290 red | 30 ml/u | | 1.20 g/ml | |
| | | (36 g/u) | | | |

In particular, the sticker is selected from Sepiret®, Peridiam® Quality or Peridiam® Active, especially preferred the sticker is selected from Sepiret 9290 red or Peridiam® Quality 316 https://www.seedgrowth.bayer.com/∼/media/d3ed77a4560740d8a568fa06f50129d c.ashx. Other stickers which might be used can be found on https://agriculture.basf.com/en/Crop-Protection/Seed-treatment.html.

The treating process can be based on the rotor / stator principle. The seed is accelerated by a rotating mixing cone and moves to the top of the static cylinder wall. Special bye pass blades on top of the wall guide the rising seed back down to the middle. So, a fine seed curtain is built around the chemical liquid spraying disc. The spraying disc produces a fine fog of chemical liquid which coats the inner seed curtain as well as the ascending seed at the cylinder wall.

Three different types of trial set-ups for the field trials have been placed: fully randomized microplot trials on 4 locations (France and UK), non-randomized 8-row plots with three replications of the untreated control within the plots on two locations (Switzerland), non-randomized, 2 times replicated 1 -row plots with three untreated controls on four locations (Belgium and The Netherlands) and non-randomized 1-row plots with five replications of the untreated control on 16 locations (Germany).

3 weeks after emergence, 9 locations with bird damage have been identified. Plant stand counts have been assessed and summarized. Fig. 1A shows figures on the individual trial locations, Fig. 1B shows the plant stand counts summed up over all locations.

Surprisingly, it was found that the use of denatonium benzoate as corvid repellent for corn showed an excellent effect. The efficiency was comparable or even better than the best bird repellents like Thiram, Korit and Mesurol. In addition, it has been observed that denatonium benzoate has a systemic effect on the corn plant. This results in bird protection of the seed but also the emerged young seedlings. Since the denatonium benzoate is diluted over the time of growing and ripening, the harvested crop, e.g. the cobs of corn, do not show amounts of denatonium which affect the post-harvest usage of corn, e.g. for animal feeding or silage purposes.

### 2. Evaluation of the phytotoxicity

In order to evaluate the phytotoxicity of different corn seed treatments, safety tests were conducted. Germination rates of corn seeds treated with various concentrations of denatonium benzoate (Bitrex®) [in g per unit, where 1 unit is 50.000 seeds] were counted after five days at 25°C. Cold test germination rates (CT) were counted after 7 days at 10°C and 5 days at 25°C. The treatments were compared to untreated seeds. Furthermore, the germination rates of corn seeds treated with denatonium benzoate in combination with further active agents, in particular fungicides, were examined under different environmental conditions. The results are shown in the following Table 2, with
KF = germination rates counted after 5 days at 25°C and
CT = cold test germination rates counted after 7 days at 10°C and 5 days at 25°C.

**Table 2**

| Variety | Chemical | Additiv | slurry ml/u | KF | ΔKF | CT | ΔCT |
|---|---|---|---|---|---|---|---|
| Amavit | no | no | 0 | 98,0% | | 85,5% | |
| Amavit | no | Bitrex 0,2g/u | 150 | 98,0% | 0,0% | 91,5% | 6,0% |
| Amavit | no | Bitrex 0,5g/u | 150 | 96,5% | -1,5% | 89,0% | 3,5% |
| Amavit | no | Bitrex 1,0g/u | 150 | 97,5% | -0,5% | 95,5% | 10,0% |
| Amavit | no | Bitrex 2,0g/u | 150 | 97,0% | -1,0% | 93,0% | 7,5% |
| Amavit | no | Bitrex 5,0g/u | 150 | 98,0% | 0,0% | 96,5% | 11,0% |
| Amavit | RedigoM | no | 150 | 98,0% | | 97,0% | |
| Amavit | RedigoM | Bitrex 0,2g/u | 150 | 100,0% | 2,0% | 97,5% | 0,5% |
| Amavit | RedigoM | Bitrex 0,5g/u | 150 | 97,5% | -0,5% | 99,0% | 2,0% |
| Amavit | RedigoM | Bitrex 1,0g/u | 150 | 96,0% | -2,0% | 99,0% | 2,0% |
| Amavit | RedigoM | Bitrex 2,0g/u | 150 | 96,5% | -1,5% | 95,5% | -1,5% |
| Amavit | RedigoM | Bitrex 5,0g/u | 150 | 99,5% | 1,5% | 96,5% | -0,5% |
| Amavit | MaximXL | no | 150 | 96,5% | | 100,0% | |
| Amavit | MaximXL | Bitrex 0,2g/u | 150 | 98,0% | 1,5% | 98,0% | -2,0% |
| Amavit | MaximXL | Bitrex 0,5g/u | 150 | 98,0% | 1,5% | 98,0% | -2,0% |
| Amavit | MaximXL | Bitrex 1,0g/u | 150 | 96,5% | 0,0% | 97,0% | -3,0% |
| Amavit | MaximXL | Bitrex2,0g/u | 150 | 95,5% | -1,0% | 99,0% | -1,0% |
| Amavit | MaximXL | Bitrex 5,0g/u | 150 | 97,5% | 1,0% | 99,0% | -1,0% |
| KXB6432 | no | no | 0 | 94,5% | | 92,5% | |
| KXB6432 | no | Bitrex 0,2g/u | 150 | 92,5% | -2,0% | 98,0% | 5,5% |
| KXB6432 | no | Bitrex 0,5g/u | 150 | 96,5% | 2,0% | 97,5% | 5,0% |
| KXB6432 | no | Bitrex 1,0g/u | 150 | 96,5% | 2,0% | 97,0% | 4,5% |
| KXB6432 | no | Bitrex 2,0g/u | 150 | 96,0% | 1,5% | 90,5% | -2,0% |
| KXB6432 | no | Bitrex 5,0g/u | 150 | 95,5% | 1,0% | 90,5% | -2,0% |
| KXB6432 | RedigoM | no | 150 | 94,5% | | 97,5% | |
| KXB6432 | RedigoM | Bitrex 0,2g/u | 150 | 94,5% | 0,0% | 97,0% | -0,5% |
| KXB6432 | RedigoM | Bitrex 0,5g/u | 150 | 95,5% | 1,0% | 96,5% | -1,0% |
| KXB6432 | RedigoM | Bitrex 1,0g/u | 150 | 96,0% | 1,5% | 99,5% | 2,0% |
| KXB6432 | RedigoM | Bitrex 2,0g/u | 150 | 95,5% | 1,0% | 98,5% | 1,0% |
| KXB6432 | RedigoM | Bitrex 5,0g/u | 150 | 97,0% | 2,5% | 96,5% | -1,0% |
| KXB6432 | MaximXL | no | 150 | 98,5% | | 99,0% | |
| KXB6432 | MaximXL | Bitrex 0,2g/u | 150 | 98,5% | 0,0% | 100,0% | 1,0% |
| KXB6432 | MaximXL | Bitrex 0,5g/u | 150 | 99,0% | 0,5% | 99,5% | 0,5% |
| KXB6432 | MaximXL | Bitrex 1,0g/u | 150 | 97,5% | -1,0% | 98,0% | -1,0% |
| KXB6432 | MaximXL | Bitrex 2,0g/u | 150 | 98,0% | -0,5% | 96,5% | -2,5% |
| KXB6432 | MaximXL | Bitrex 5,0g/u | 150 | 97,5% | -1,0% | 99,0% | 0,0% |
| ø | no | no | 0 | 96,3% | | 89,0% | |
| ø | no | Bitrex 0,2g/u | 150 | 95,3% | -1,0% | 94,8% | 5,8% |
| ø | no | Bitrex 0,5g/u | 150 | 96,5% | 0,3% | 93,3% | 4,3% |
| ø | no | Bitrex 1,0g/u | 150 | 97,0% | 0,8% | 96,3% | 7,2% |
| ø | no | Bitrex 2,0g/u | 150 | 96,5% | 0,3% | 91,8% | 2,8% |
| ø | no | Bitrex 5,0g/u | 150 | 96,8% | 0,5% | 93,5% | 4,5% |
| ø | RedigoM | no | 150 | 96,3% | | 97,3% | |
| ø | RedigoM | Bitrex 0,2g/u | 150 | 97,3% | 1,0% | 97,3% | 0,0% |
| ø | RedigoM | Bitrex 0,5g/u | 150 | 96,5% | 0,3% | 97,8% | 0,5% |
| ø | RedigoM | Bitrex 1,0g/u | 150 | 96,0% | -0,2% | 99,3% | 2,0% |
| ø | RedigoM | Bitrex 2,0g/u | 150 | 96,0% | -0,2% | 97,0% | -0,2% |
| ø | RedigoM | Bitrex 5,0g/u | 150 | 98,3% | 2,0% | 96,5% | -0,7% |
| ø | MaximXL | no | 150 | 97,5% | | 99,5% | |
| ø | MaximXL | Bitrex 0,2g/u | 150 | 98,3% | 0,7% | 99,0% | -0,5% |
| ø | MaximXL | Bitrex 0,5g/u | 150 | 98,5% | 1,0% | 98,8% | -0,7% |
| ø | MaximXL | Bitrex 1,0g/u | 150 | 97,0% | -0,5% | 97,5% | -2,0% |
| ø | MaximXL | Bitrex 2,0g/u | 150 | 96,8% | -0,7% | 97,8% | -1,8% |
| ø | MaximXL | Bitrex 5,0g/u | 150 | 97,5% | 0,0% | 99,0% | -0,5% |
| ø | ø | no | 0 | 96,7% | | 95,3% | |
| ø | ø | Bitrex 0,2g/u | 150 | 96,9% | 0,3% | 97,0% | 1,8% |
| ø | ø | Bitrex 0,5g/u | 150 | 97,2% | 0,5% | 96,6% | 1,3% |
| ø | ø | Bitrex 1,0g/u | 150 | 96,7% | 0,0% | 97,7% | 2,4% |
| ø | ø | Bitrex 2,0g/u | 150 | 96,4% | -0,2% | 95,5% | 0,3% |
| ø | ø | Bitrex 5,0g/u | 150 | 97,5% | 0,8% | 96,3% | 1,1% |

### Example 3: Determination of systemic activity of denatonium benzoate

To determine, if denatonium benzoate could be systemic (taken up by the plant), a Liquid Chromatography with tandem mass spectrometry (LC-MS-MS) was performed, which is a powerful analytical technique that combines the separating power of liquid chromatography with the highly sensitive and selective mass analysis capability of triple quadrupole mass spectrometry. Therefore, we used 1) seedlings just after field emergence to determine the content of denatonium benzoate in the complete plant and in the sprout separately (Table 3), as well as 2) middle-aged plants (V6-V8), where the leaves have been investigated (Table 4).

**Table 3. Results of denatonium benzoate determination in seedlings just after field emergence**

| Sample | Description | Weight | Final Conc. | | | µg DNB / plant or sprout |
|---|---|---|---|---|---|---|
| | | mg | mg/g | ppm/ µg/g | ppb/ ng/g | |
| 1 | 5 complete | 3245.54 | 0.009 | 9,047 | 9047.3 | 5.87 |
| 2 | 4 complete | 2726.9 | 0.021 | 20,920 | 20920.4 | 14.26 |
| 3 | 4 sprout | 813.36 | 0.001 | 0,782 | 782.1 | 0.16 |
| 4 | 4 sprout | 1008.56 | 0.000 | 0,231 | 231.5 | 0.06 |

**Table 4. Results of denatonium benzoate determination in middle-aged plants**

| Sample | Description | Weight | Final Conc. |
|---|---|---|---|
| | | mg | ppb/ ng/g |
| 14 DNB 0.8g_P1 | leaves | 3039.6 | 5.49 |
| 14 DNB 0.8g_P2 | | 3098.6 | 5.34 |
| 14 DNB 0.8g_P3 | | 3053.9 | 5.46 |
| 20 DNB 0.4g_P1 | leaves | 3027.6 | 6.61 |
| 20 DNB 0.4g_P2 | | 3022.0 | 20.03 |
| 20 DNB 0.4g_P3 | | 3021.5 | 12.04 |
| 22 DNB 0.4g_P1 | leaves | 3087.0 | 4.74 |
| 22 DNB 0.4g_P2 | | 3072.1 | 17.26 |
| 22 DNB 0.4g_P3 | | 3044.4 | 13.72 |

Denatonium benzoate was taken up by the plant and shows concentration differences between different plant sections/organs and development stadiums:
In early stage denatonium benzoate is selective detectable. The concentration in the complete plant is in the lower ppm range (∼10-20 ppm) and in sprouts is in the upper ppb range (∼200-800 ppb). The variation in concentration is high (Table 3). In middle-aged corn plants the concentration in leaves is in the lower ppb range (∼5-20 ppb). Variation in concentration differs between type (Inter) and plant (Intra) and concentration of DNB decrease from early stage (200-800 ppb in sprout) to mid stage (5-20 ppb in leaves) significantly.

## Claims

1. Corn seed, treated with denatonium benzoate, wherein the denatonium benzoate is adsorbed on the seed and/or absorbed into the seed.

2. The corn seed according to claim 1, wherein the seed is coated with denatonium benzoate, optionally in combination with one or more further active agents and/or additives.

3. The corn seed according to claim 2, wherein the further active agents are selected from phytochemicals and antimicrobial agents, in particular bactericides, antiparasitics and fungicides, such as DSM RD9103 BRP, chili extract, black cumin oil, yucca extract, mentha pulegium extract, aluminium ammonium sulfate, hops extract, fat encapsulated plant extracts, alginate encapsulated plant extracts, tefluthrin, yellow colour substance, SatecWFO20, metalaxyl, fludioxonil, prothioconazole, and combinations thereof, preferably Redigo M and/or Maxim XL, and/or
wherein the additives comprise sticking agents, preferably water-based sticking agents such as Sepiret®, Peridiam® Quality or Peridiam® Active.

4. The corn seed according to any one of the preceding claims, wherein denatonium benzoate is present in an amount effective to provide protection against bird damage, in particular against bird from the genus *Corvus* (corvids) such as crows, ravens, rooks, and jackdaws.

5. The corn seed according to any one of the preceding claims, wherein the germination capacity of the seed is essentially the same as for untreated seed.

6. Corn plant or a part thereof grown from the corn seed according to anyone of claims 1 to 5, in particular wherein the corn plant or a part thereof contains denatonium benzoate, and optionally in addition one or more further active agents and/or additives, preferably as defined in claim 3.

7. The corn plant or a part thereof according to claim 6, wherein the corn plant is
i) a seedling and contains denatonium benzoate in a mean concentration of 1 to 50 ppm, preferably 5 to 30 ppm, more preferably 10 to 22 ppm, in the entire seedling; or
ii) a seedling and contains denatonium benzoate in a mean concentration of 50 to 2500 ppb, preferably 100 to 1500 ppb, more preferably 200 to 800 ppb, in sprout tissue of the seedling; or
iii) a plant in the development stage V6-V8 and contains denatonium benzoate in a mean concentration of 0.5 to 100 ppb, preferably 1 to 50 ppb, more preferably 5 to 20 ppb, in leaf tissue of the seedling.

8. Use of denatonium benzoate for protecting corn seed or corn plant, preferably a corn seedling, from bird damage, optionally in combination with one or more further active agents and/or additives, preferably as defined in claim 3.

9. Method of protecting a corn seed against bird damage, the method comprising contacting the corn seed with denatonium benzoate, optionally in combination with one or more further active agents and/or additives, preferably as defined in claim 3.

10. The method according to claim 9, wherein denatonium benzoate is used in an amount of 0.1-5 g per 50,000 seeds, in particular 0.2-2 g per 50,000 seeds, preferably 0.2-0.6 g per 50,000 seeds when used in combination with further active agents and 0.5-1.5 g per 50,000 seeds when used as a single active agent.

11. The method according to claim 9 or 10, wherein denatonium benzoate is used as a solid powder in crystalline pure form or as a liquid composition further comprising a sticking agent.

12. The method according to claim 11, wherein the liquid composition comprises denatonium benzoate in a concentration of about 1-100 g/L, in particular 10-50 g/L, preferably 13-27 g/L.

13. A method of providing a corn plant protected against bird damage, the method comprising
a) providing a corn seed according to any one of claims 1-5 or a corn seed obtained or obtainable according to the method of any one of claims 9-12, and
b) growing a corn plant from the corn seed of a).

14. The method according to claim 13, wherein the corn plant in step b) is a corn plant according to claim 6 or 7.

15. Method for controlling bird damage on corn seeds or corn plants in an agricultural area, comprising the following steps:
a) sowing corn seeds according to any one of claims 1-5 or corn seeds obtained or obtainable according to the method of any one of claims 9-12 on an agricultural area, and
b) growing corn plants from the corn seeds,
wherein one or both steps a) and b) are performed under bird infestation conditions;
wherein the plant stand count on said agricultural area is higher than under comparable under the bird infestation conditions on a comparable agricultural area with untreated seeds or plants grown from untreated seeds,
in particular wherein the plant stand count on said agricultural area is at least 10%, preferably at least 20% and more preferably at least 30% higher than on a comparable agricultural area with untreated seeds or plants grown from untreated seeds.
